# EUROPÄISCHE PATENTSCHRIFT

(11) **EP 3 120 958 B1**
(45) Veröffentlichungstag und Bekanntmachung des Hinweises auf die Patenterteilung: **20.11.2019**
(21) Anmeldenummer: 16180263.2
(22) Anmeldetag: 20.07.2016
(51) Int. Cl.: B23C 5/10, B23C 5/28, B23B 51/06, B23B 31/00, B23B 31/11, B23Q 11/10

(54) **WERKZEUGAUFNAHME UND EINSCHRAUBWERKZEUG MIT DICHTUNG**
TOOL HOLDER AND SCREW-IN TOOL WITH SEAL
PORTE-OUTIL ET OUTIL DE VISSAGE DOTE D'UN JOINT

(30) Priorität: 24.07.2015 DE 102015112080
(43) Veröffentlichungstag der Anmeldung: 25.01.2017
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang

(56) Entgegenhaltungen:
- WO-A1-2007/003248
- DE-A1- 10 157 450
- DE-A1-102005 050 754
- DE-U1-202007 019 672
- JP-U- S61 178 651
- US-A- 4 021 920
- US-A1- 2006 029 479
- US-A1- 2013 230 361

## Beschreibung

Die Erfindung betrifft eine Werkzeugaufnahme gemäß dem Oberbegriff des Anspruchs 1, ein Einschraubwerkzeug gemäß dem Oberbegriff des Anspruchs 7 und eine Werkzeuganordnung gemäß dem Oberbegriff des Anspruchs 10.

Aus der US 4,021,920 A geht eine solche Werkzeugaufnahme in Form eines Werkzeughalters hervor, der einen Schaft mit einer zentralen Bohrung und endseitig eine mit einem Innengewinde versehenen Ausnehmung aufweist. Ein entsprechendes Einschraubwerkzeug wird dort mittels eines Außengewindes in das Innengewinde der Ausnehmung eingeschraubt, wobei zwischen Werkzeug und Schaft eine weichelastische Dichtung in die Ausnehmung eingesetzt ist. Die Dichtung dichtet die zentrale Bohrung in dem Werkzeughalter gegenüber einem Zuführkanal für Kühlflüssigkeit in dem Werkzeug sicher ab, um somit ein Eindringen des korrosiven Reinigungsmittels in die Werkzeugaufnahme zu verhindern.

Aus der DE 20 2007 019672 U1 geht ein System aus Werkzeughalter und Werkzeug hervor, wobei der Werkzeughalter eine zylindrische Werkzeugaufnahme mit Aufnahmeöffnung aufweist und darin konzentrisch der zylindrische Schaft eines Werkzeugs aufgenommen ist, wobei das Werkzeug und der Werkzeughalter zueinander bezüglich einer Drehachse angeordnet sind, wobei das System eine ein axiales Auswandern des Werkzeugs sperrende Auszugssicherung aufweist, welche mindestens zwei Sperrelemente und dazu korrespondierende Lagerbohrungen umfasst, wobei die Lagerbohrungen zur Drehachse hin schneidend ausgebildet sind und in einer Ebene, die senkrecht zur Drehachse liegt, angeordnet sind, wobei das Rotationswerkzeug während des Betriebs sowohl drehmomentfest als auch axial bezüglich der Drehachse festgehalten wird, ohne auszuwandern.

Eine weitere Werkzeugaufnahme zusammen mit einem Einschraubwerkzeug ist aus der DE 10 2012 100 976 B4 bekannt. Dort weist die Werkzeugaufnahme einen Grundkörper mit einer Aufnahmeöffnung zur Aufnahme eines Einschraubwerkzeugs auf. In der Aufnahmeöffnung ist ein Innengewinde ausgebildet, welches haltend mit einem Außengewinde an dem in die Werkzeugaufnahme eingeschraubten Einschraubwerkzeug zusammenwirkt. In dem Grundkörper der Werkzeugaufnahme ist ein Versorgungskanal ausgebildet, welcher in einem Austrittsbereich in die Aufnahmeöffnung mündet. Das Einschraubwerkzeug weist einen Werkzeugkopf und einen Werkzeugschaft auf, wobei an dem Werkzeugschaft das Außengewinde ausgebildet ist. In dem Einschraubwerkzeug ist ein Zuführkanal ausgebildet, welcher in einem Eintrittsbereich an einem freien Ende des Werkzeugschafts mündet. Da der Austrittsbereich des Versorgungskanals und der Eintrittsbereich des Zuführkanals einander gegenüberliegen, kann Kühl- bzw. Schmiermittel über eine Pumpe von einem Reservoir über den Versorgungskanal in der Werkzeugaufnahme in den Zuführkanal in dem Einschraubwerkzeug und anschließend zu einem Bearbeitungsbereich geleitet werden. Hierbei besteht jedoch das Problem, dass bei einem Wechsel des Einschraubwerkzeugs oftmals Kühl- und Schmierflüssigkeit an das Innengewinde der Werkzeugaufnahme bzw. das Außengewinde des Einschraubwerkzeugs oder auch an entsprechende Stützflächen gelangt, wodurch die Gewindeverbindung beeinträchtigt wird. Insbesondere kann durch die unbestimmt herabgesetzte Reibkraft zwischen dem Einschraubwerkzeug und der Werkzeugaufnahme aufgrund der Schmierwirkung das notwendige Drehmoment zur Fixierung des Einschraubwerkzeugs nicht mehr zuverlässig eingestellt werden, was den Bruch des Einschraubwerkzeugs zur Folge haben kann. Durch eine Querschnittsvergrößerung am Übergang zwischen dem Versorgungskanal und dem Zuführkanal kann es zudem zu einer frühzeitigen Kondensation von gasförmigen Kühlmitteln kommen, was sich nachteilig auf die Kühlmittelversorgung auswirkt.

Aufgabe der Erfindung ist es daher, ein Einschraubwerkzeug, eine Werkzeugaufnahme und eine Werkzeuganordnung zu schaffen, welche eine sichere Montage mit verbesserter Kühl- und Schmierversorgung ermöglichen.

Diese Aufgabe wird durch eine Werkzeugaufnahme mit den Merkmalen des Anspruchs 1, ein Einschraubwerkzeug mit den Merkmalen des Anspruchs 7 und eine Werkzeuganordnung mit den Merkmalen des Anspruchs 10 gelöst.

Die erfindungsgemäße Werkzeugaufnahme zeichnet sich dadurch aus, dass in der Aufnahmeöffnung in dem Austrittsbereich des Versorgungskanals eine mit mindestens einer Durchgangsöffnung versehene Dichtung vorgesehen ist. Durch die Dichtung kann eine dichtende Anlage an einem in die Werkzeugaufnahme eingeschraubten Einschraubwerkzeug erreicht werden, wodurch kein Kühl- bzw. Schmiermittel zu dem Innengewinde der Werkzeugaufnahme bzw. dem Außengewinde des Einschraubwerkzeugs gelangen kann. Zudem kann durch die Dichtung eine Querschnittsvergrößerung und damit eine Beeinträchtigung der Kühl- bzw. Schmiermittelversorgung wirksam verhindert werden.

Die Dichtung ist zweckmäßigerweise ringförmig ausgebildet. Die kann aber auch eine andere geeignete Kontur aufweisen.

Um eine sichere und lösbare Befestigung der Dichtung an dem Grundkörper der Werkzeugaufnahme zu gewährleisten, ist die Dichtung in einer Aussparung in dem Grundkörper im Austrittsbereich des Versorgungskanals angeordnet. Sie ist dort formschlüssig, gegebenenfalls zusätzlich reibschlüssig bzw. in die Aussparung eingeklebt oder ähnlich, gehalten. Die Dichtung kann dazu aus einem elastischen Material bestehen, welches durch geringfügiges Zusammendrücken in die Aussparung eingesetzt und dort durch den Anpressdruck gegen die Aussparung gehalten ist.

Um eine formschlüssige Halterung der ringförmigen Dichtung in der Aussparung zu erreichen, vergrößert sich die Aussparung in Richtung von der Aufnahmeöffnung zu dem Versorgungskanal, so dass sich eine Hinterschneidung in der Aussparung ergibt. Dies kann beispielsweise dadurch erreicht werden, dass sich die Aussparung in Richtung von der Aufnahmeöffnung zu dem Versorgungskanal konisch vergrößert. Eine entsprechend konisch und mit etwas Übermaß ausgebildete Dichtung kann dann sowohl formschlüssig als auch reibschlüssig in der Aussparung gehalten werden. Es ist aber auch möglich, dass die Aussparung in Richtung von der Aufnahmeöffnung zu dem Versorgungskanal eine Stufe mit größerer Innenabmessung aufweist. Diese Stufe kann zwischen zwei buchsenförmigen Abschnitten der Aussparung mit unterschiedlichen Innendurchmessern angeordnet sein. Die ringförmige Dichtung kann dann entsprechend zylindrisch mit einer Stufe zwischen zwei Bereichen mit unterschiedlichem Außendurchmesser ausgebildet sein. Durch die Stufe wird eine besonders gute formschlüssige Fixierung der ringförmigen Dichtung in der Aussparung erreicht.

Bevorzugt steht die ringförmige Dichtung in die Aufnahmeöffnung hervor, so dass diese in unmittelbaren Kontakt mit einem in die Aufnahmeöffnung eingeschraubten Einschraubwerkzeug treten kann. Dies kann beispielsweise dadurch erreicht werden, dass die Erstreckung der ringförmigen Dichtung in Längsrichtung der Werkzeugaufnahme größer ist, als die Erstreckung der Aussparung. Dadurch, dass die ringförmige Dichtung auch an einer hinteren, von der Aufnahmeöffnung entfernten radialen Anlagefläche der Aussparung anliegt, kann die ringförmige Dichtung besonders gut gegen das Einschraubwerkzeug beaufschlagt werden, wodurch die Dichtwirkung verbessert wird. Die Dichtung kann auch so ausgebildet sein, dass sie in eine Vertiefung an dem freien Ende eines Werkzeugschafts des Einschraubwerkzeugs eingreift.

In einer vorteilhaften Ausführungsform weist die Dichtung einen Durchgangskanal auf, welcher koaxial zu dem Versorgungskanal im Austrittsbereich angeordnet ist. Hierdurch kann das Kühl- bzw. Schmiermittel besonders reibungsarm transportiert werden. In einer besonders vorteilhaften Ausführungsform entspricht der Durchmesser des Durchgangskanals dem Durchmesser des Versorgungskanals im Austrittsbereich, so dass es auch zu keiner Querschnittsvergrößerung in den Kanälen kommt und das Kühl- und Schmiermittel ohne Rezirkulation und Auskondensierung befördert werden kann. Der Durchgangskanal kann aber auch einen Durchmesser aufweisen, welcher kleiner oder größer als der Durchmesser des Versorgungskanals im Austrittsbereich ist. Der Durchgangskanal kann einen konstanten oder auch veränderlichen Durchmesser aufweisen, um einem guten Übergang zwischen dem Versorgungskanal und dem Durchgangskanal zu erreichen.

Des Weiteren wird auch ein Einschraubwerkzeug beansprucht. Dieses umfasst einen Werkzeugkopf und einen Werkzeugschaft, wobei der Werkzeugschaft ein Außengewinde zum haltenden Zusammenwirken mit einem Innengewinde einer Werkzeugaufnahme aufweist. In dem Einschraubwerkzeug ist ein Zuführkanal ausgebildet, welcher in einem Eintrittsbereich an einem freien Ende des Werkzeugschafts mündet und zum Transport von Kühl- und Schmiermittel zu einem freien Ende des Werkzeugkopfs ausgebildet ist. Das Einschraubwerkzeug sieht an dem freien Ende des Werkzeugschafts in dem Eintrittsbereich eine mit einer Durchgangsöffnung versehene Dichtung vor. Durch die Dichtung kann eine dichtende Anlage an einer Werkzeugaufnahme, in welcher das Einschraubwerkzeug einschraubbar ist, erreicht werden, wodurch kein Kühl- bzw. Schmiermittel zu dem Innengewinde der Werkzeugaufnahme bzw. dem Außengewinde des Einschraubwerkzeugs gelangen kann. Zudem kann durch die Dichtung eine Querschnittsvergrößerung und damit eine Beeinträchtigung der Kühl- bzw. Schmiermittelversorgung wirksam verhindert werden.

Um eine sichere und lösbare Befestigung der ringförmigen Dichtung an dem freien Ende des Werkzeugschafts in dem Eintrittsbereich zu gewährleisten, ist die ringförmige Dichtung in einer Ausnehmung in dem Werkzeugschaft im Eintrittsbereich des Zuführkanals angeordnet. Die ringförmig oder anderweitig ausgestaltete Dichtung kann dazu aus einem elastischen Material bestehen, welches durch geringfügiges Zusammendrücken in die z.B. als Vertiefung ausgebildete Ausnehmung eingesetzt und dort durch den Anpressdruck gegen Ausnehmung gehalten wird.

Um eine formschlüssige Halterung der ringförmigen Dichtung in der Ausnehmung zu erreichen, vergrößert sich die Ausnehmung in Richtung von dem Werkzeugschaft zu dem Werkzeugkopf, so dass sich eine Hinterschneidung in der Ausnehmung ergibt. Dies kann beispielsweise dadurch erreicht werden, dass sich die Ausnehmung in Richtung von dem Werkzeugschaft zu dem Werkzeugkopf konisch vergrößert. Eine entsprechend konisch und mit etwas Übermaß ausgebildete ringförmige Dichtung kann dann sowohl formschlüssig als auch reibschlüssig in der Ausnehmung gehalten werden. Es ist aber auch möglich, dass die Ausnehmung in Richtung von dem Werkzeugschaft zu dem Werkzeugkopf eine Stufe mit größerer Innenabmessung aufweist. Diese Stufe kann zwischen zwei buchsenförmigen Abschnitten der Ausnehmung mit unterschiedlichen Innendurchmessern angeordnet sein. Die ringförmige Dichtung kann dann entsprechend zylindrisch mit einer Stufe zwischen zwei Bereichen mit unterschiedlichem Außendurchmesser ausgebildet sein. Durch die Stufe wird eine besonders gute formschlüssige Fixierung der ringförmigen Dichtung in der Ausnehmung erreicht.

Bevorzugt steht die Dichtung von dem freien Ende des Werkzeugschafts nach außen hervor, so dass diese in unmittelbaren Kontakt mit einer Werkzeugaufnahme, in welche das Einschraubwerkzeug eingeschraubt ist, treten kann. Dies kann beispielsweise dadurch erreicht werden, dass die Erstreckung der ringförmigen Dichtung in Längsrichtung des Einschraubwerkzeugs größer ist, als die Erstreckung der Ausnehmung. Dadurch, dass die ringförmige Dichtung auch an einer inneren, von dem freien Ende des Werkzeugschafts entfernten radialen Anlagefläche der Ausnehmung anliegt, kann die ringförmige Dichtung besonders gut gegen die Werkzeugaufnahme beaufschlagt werden, wodurch die Dichtwirkung verbessert wird.

In einer vorteilhaften Ausführungsform weist die Dichtung einen Durchgangskanal auf, welcher koaxial zu dem Zuführkanal im Eintrittsbereich angeordnet ist. Hierdurch kann das Kühl- bzw. Schmiermittel besonders reibungsarm transportiert werden. In einer besonders vorteilhaften Ausführungsform entspricht der Durchmesser des Durchgangskanals dem Durchmesser des Zuführkanals, so dass es auch zu keiner Querschnittsvergrößerung in den Kanälen kommt und das Kühl- und Schmiermittel ohne Rezirkulation und Auskondensierung befördert werden kann. Auch hier kann der Durchgangskanal einen Durchmesser aufweisen, der kleiner oder größer als der Durchmesser des Zuführkanals im Eingangsbereich ist. Der Durchgangskanal kann einen konstanten oder veränderlichen Durchmesser aufweisen.

Es wird außerdem eine Werkzeuganordnung umfassend ein Einschraubwerkzeug und eine Werkzeugaufnahme für das Einschraubwerkzeug beansprucht, bei der in der Werkzeugaufnahme ein Versorgungskanal und in dem Einschraubwerkzeug ein Zuführkanal zur Versorgung und Zuführung von Schmier- und Kühlmittel vorgesehen ist, beansprucht. Die Werkzeuganordnung sieht zwischen dem Versorgungskanal und dem Zuführkanal eine Dichtung vor. Diese Dichtung ist derart in der Werkzeuganordnung angeordnet, dass sie dichtend sowohl an der Werkzeugaufnahme als auch dem Einschraubwerkzeug anliegt und den Austritt von in dem Versorgungskanal in den Zuführkanal übergeleitetem Kühl- und Schmiermittel zuverlässig verhindert.

Bei der Werkzeuganordnung ist das Einschraubwerkzeug und/oder die Werkzeugaufnahme wie oben beschrieben ausgebildet. Werden sowohl an dem Einschraubwerkzeug als auch an der Werkzeuganordnung entsprechende ringförmige Dichtungen angeordnet, liegen diese im eingeschraubten Zustand des Einschraubwerkzeugs in der Werkzeugaufnahme aneinander an, wodurch sich durch die beiden elastischen Dichtungspartner eine besonders gute Dichtwirkung ergibt.

Weitere Besonderheiten und Vorzüge der Erfindung ergeben sich aus der folgenden Beschreibung bevorzugter Ausführungsbeispiele anhand der Zeichnung. Es zeigen:
- **Fig. 1**: einen Längsschnitt durch eine Werkzeuganordnung mit einer Werkzeugaufnahme, einem Einschraubwerkzeug und einer Dichtung;
- **Fig. 2**: eine Detailansicht der Werkzeuganordnung aus Figur 1;
- **Fig. 3**: eine Detailansicht einer alternativen Ausführungsform und
- **Fig. 4**: eine Detailansicht einer weiteren Ausführungsform.

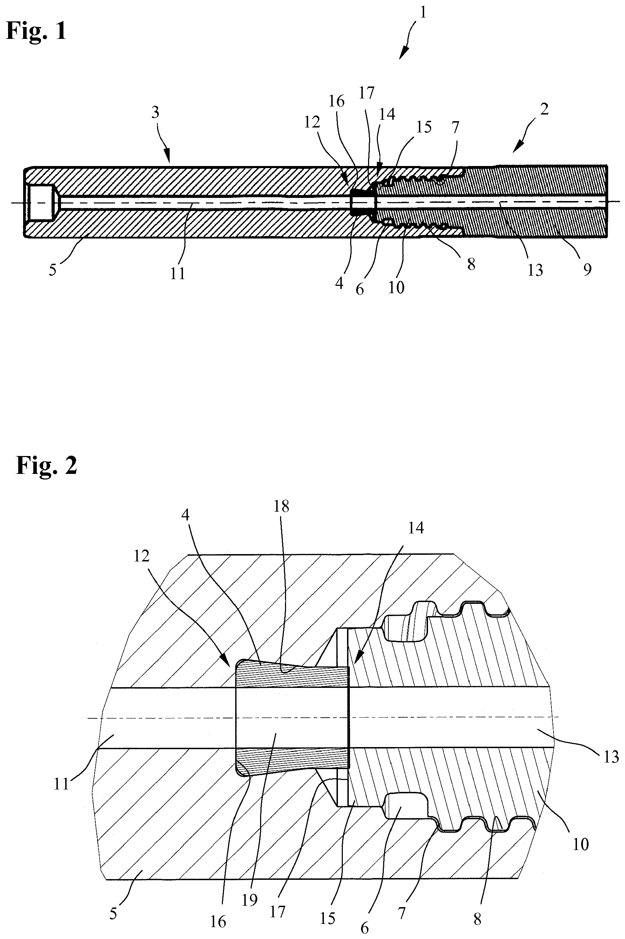

In Figur 1 ist eine Werkzeuganordnung 1 im Längsschnitt gezeigt, welche ein Einschraubwerkzeug 2, eine Werkzeugaufnahme 3 und eine ringförmige Dichtung 4 umfasst. Die Werkzeugaufnahme 3 umfasst einen Grundkörper 5 mit einer Aufnahmeöffnung 6 zur Aufnahme des Einschraubwerkzeugs 2. Um eine haltende, aber lösbare Verbindung zwischen der Werkzeugaufnahme 3 und dem Einschraubwerkzeug 2 zu ermöglichen, ist in der Aufnahmeöffnung 6 der Werkzeugaufnahme 3 ein Innengewinde 7 angeordnet, welches zum haltenden Zusammenwirken mit einem korrespondierenden Außengewinde 8 an dem Einschraubwerkzeug 2 ausgebildet ist.

Das Einschraubwerkzeug 2 ist als Fräser ausgebildet und weist einen Werkzeugkopf 9 mit nicht dargestellten Schneiden zur spanabhebenden Bearbeitung von Werkstücken und einen Werkzeugschaft 10 auf, an welchem das Außengewinde 8 des Einschraubwerkzeugs 2 angeordnet ist.

Um eine Zuführung von Kühl- bzw. Schmiermittel über die Werkzeugaufnahme 3 zu den Schneiden des Werkzeugkopfs 9 des Einschraubwerkzeugs 2 zu ermöglichen, ist konzentrisch in dem Grundkörper 5 der Werkzeugaufnahme 3 ein Versorgungskanal 11 angeordnet, welcher in einem Austrittsbereich 12 in der Aufnahmeöffnung 6 mündet. Der Austrittsbereich 12 ist am Boden der Aufnahmeöffnung 6 angeordnet und als ebene, radial verlaufende Stirnfläche 16 ausgebildet. Ebenso ist auch in dem Einschraubwerkzeug 2 ein Zuführkanal 13 vorgesehen, welcher in einem Eintrittsbereich 14 an einem freien Ende 15 des Werkzeugschafts 10 mündet. Das freie Ende 15 des Werkzeugschafts 10 wird durch eine ebene, radial verlaufende Stirnseite 17 des Werkzeugschafts 10 gebildet, welche dem Austrittsbereich 12 der Werkzeugaufnahme 3 gegenüberliegt. Der Zuführkanal 13 verläuft konzentrisch durch das Einschraubwerkzeug 2 und mündet anschließend an einem den freien Ende 15 des Werkzeugschafts 10 gegenüberliegenden Ende des Einschraubwerkzeugs 2 in dem Werkzeugkopf 9. Zwischen dem Austrittsbereich 12 der Aufnahmeöffnung 6 der Werkzeugaufnahme 3 und dem Eintrittsbereich 14 an dem freien Ende 15 des Werkzeugschafts 10 ist die ringförmige Dichtung 4 angeordnet, welche in Bezug auf die weiteren Figuren näher beschrieben wird.

In Figur 2 ist eine Detailansicht der Darstellung der Werkzeuganordnung 1 aus Figur 1 im Bereich der ringförmigen Dichtung 4 gezeigt. Wie aus der Figur 2 zu entnehmen ist, ist die ringförmige Dichtung 4 in einer Aussparung 18 in dem Grundkörper 5 der Werkzeugaufnahme 3 im Austrittsbereich 12 des Versorgungskanals 11 eingesetzt und formschlüssig gehalten. Die Aussparung 18 ist dabei so ausgebildet, dass sie sich in Richtung von der Aufnahmeöffnung 6 zu dem Versorgungskanal 11 konisch vergrößert.

Die ringförmige Dichtung 4 besteht aus einem elastischen Material, beispielsweise einem hochelastischen Polyurethan-Elastomer-Erzeugnis. Durch geringfügiges Zusammendrücken kann die ringförmige Dichtung 4 in die Aussparung 18 eingeschoben werden und dehnt sich dort anschließend wieder auf die ursprüngliche Größe aus. Hierdurch hintergreift die ringförmige Dichtung 4 die konische Aussparung 18, so dass eine formschlüssige Halterung der ringförmigen Dichtung 4 in der Aussparung 18 erreicht wird. Zudem kann die Aussparung 18 auch gegenüber der ringförmigen Dichtung 4 ein geringfügiges Untermaß aufweisen, so dass sich die ringförmige Dichtung 4 an die Aussparung 18 andrückt und damit zudem eine reibschlüssige Verbindung erreicht wird. Durch die Halterung der ringförmigen Dichtung 4 in der Aussparung 18 wird gewährleistet, dass sich die ringförmige Dichtung 4 genau positioniert ist und sich nicht unbeabsichtigt verschiebt oder löst, was grundsätzlich insbesondere bei den häufig notwendigen Wechseln der Einschraubwerkzeuge 2 auftreten könnte.

In Längsrichtung der Werkzeugaufnahme 3 ist die Erstreckung der ringförmigen Dichtung 4 größer ausgebildet, als die Erstreckung der Aussparung 18, wodurch die ringförmige Dichtung 4 aus der Aussparung 18 in die Aufnahmeöffnung 6 hervorsteht. In den Figuren ist jeweils die Werkzeugaufnahme 3 mit dem eingeschraubten Einschraubwerkzeug 2 gezeigt, wobei ohne das Einschraubwerkzeug 2 die ringförmige Dichtung 4 noch weiter in die Aufnahmeöffnung 6 hervorstehen würde. Die ringförmige Dichtung 4 erstreckt sich gerade so weit in die Aufnahmeöffnung 6, dass bei einem Einschrauben des Einschraubwerkzeugs 2 in die Aufnahmeöffnung 6 der Werkzeugaufnahme 3 die Stirnseite 17 an dem Werkzeugschaft 10 zur Anlage an der ringförmigen Dichtung 4 kommt und gegen diese gepresst wird. Dadurch, dass die ringförmige Dichtung 4 auch an der Stirnfläche 16 der Aufnahmeöffnung 6 anliegt, kann die ringförmige Dichtung besonders gut gegen das Einschraubwerkzeug 2 beaufschlagt werden, wodurch die Dichtwirkung verbessert wird.

Um das Kühl- bzw. Schmiermittel zwischen dem Versorgungskanal 11 im Austrittsbereich 12 in der Aufnahmeöffnung 6 und dem Zuführkanal 13 im Eintrittsbereich 14 in dem Werkzeugschaft 10 zu führen, weist die ringförmige Dichtung 4 einen Durchgangskanal 19 auf, welcher koaxial zu dem Versorgungskanal 11 im Austrittsbereich 12 und dem Zuführkanal 13 im Eintrittsbereich 14 ausgebildet ist. Der Innendurchmesser des Durchgangskanals 19 entspricht dabei dem Durchmesser des Versorgungskanals 11 im Austrittsbereich 12 und des Zuführkanals 13 im Eintrittsbereich 14, so dass Kühl- bzw. Schmiermittel ohne Änderungen des Kanalquerschnitts von der Werkzeugaufnahme 3 in das Einschraubwerkzeug 2 transportiert werden kann. Hierdurch ist einerseits ein besonders reibungsarmer Transport möglich und andererseits wird ein Auskondensieren von gasförmigen Kühlmitteln durch eine Druckreduzierung bei Kanalquerschnittserweiterungen verhindert.

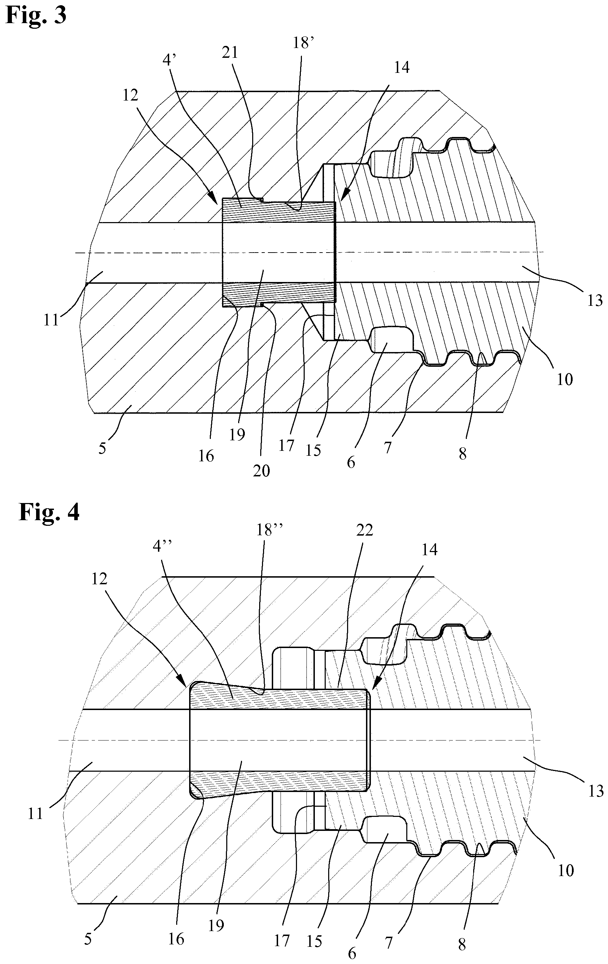

In Figur 3 ist eine alternative Ausführungsform der ringförmigen Dichtung 4' gezeigt. Diese ist an ihrem Außenumfang zylindrisch ausgebildet und weist eine Stufe 20 zwischen zwei Bereichen mit unterschiedlichen Außendurchmessern auf. Entsprechend dieser Ausgestaltung der ringförmigen Dichtung 4' ist auch die Aussparung 18' in der Aufnahmeöffnung 6 der Werkzeugaufnahme 3 unterschiedlich ausgestaltet. Die Aussparung 18' weist in Richtung von der Aufnahmeöffnung 6 zu dem Versorgungskanal 11 eine Stufe 21 mit größerer Innenabmessung auf, wodurch sich auch die Aussparung 18' in Richtung von der Aufnahmeöffnung 6 zu dem Versorgungskanal 11 vergrößert. Durch die Stufe 20 der ringförmigen Dichtung 4' wird die Stufe 21 in der Aussparung 18' formschlüssig hintergriffen und durch radiale verlaufende ebene Kontaktflächen an den Stufen ein besonders stabiler Formschluss der elastischen ringförmigen Dichtung 4' mit der Aussparung 18' erreicht. Die weiteren Elemente der in Figur 3 dargestellten alternativen Ausführungsform entsprechen denen der in den Figuren 1 und 2 gezeigten Ausführungsform und sind daher mit den gleichen Bezugszeichen versehen.

Die in Figur 4 gezeigte Ausführung unterscheidet sich von der Ausführungsform der Figur 2 lediglich dadurch, dass die dort in der Aussparung 18" angeordnete Dichtung 4" zum Eingriff in eine als Vertiefung in der Stirnfläche 17 ausgebildete Ausnehmung 22 am freien Ende 15 des Werkzeugschafts 10 des Einschraubwerkzeugs 2 ausgebildet ist. Die Dichtung 4" könnte aber z.B. auch eine zylindrische Außenform aufweisen und in der Ausnehmung 22 am freien Ende 15 des Werkzeugschafts 10 gehalten sein. Die Dichtung 4" könnte also auch an dem Einschraubwerkzeug 2 gehalten und zum dichtenden Eingriff in die Aussparung 18" an der Werkzeugaufnahme 3 ausgebildet sein.

### Bezugszeichenliste

- 1: Werkzeuganordnung
- 2: Einschraubwerkzeug
- 3: Werkzeugaufnahme
- 4, 4', 4": Dichtung
- 5: Grundkörper
- 6: Aufnahmeöffnung
- 7: Innengewinde
- 8: Außengewinde
- 9: Werkzeugkopf
- 10: Werkzeugschaft
- 11: Versorgungskanal
- 12: Austrittsbereich
- 13: Zuführkanal
- 14: Eintrittsbereich
- 15: Freies Ende des Werkzeugschafts
- 16: Stirnfläche
- 17: Stirnseite
- 18, 18',18": Aussparung
- 19: Durchgangskanal
- 20: Stufe an der ringförmigen Dichtung
- 21: Stufe in der Aussparung
- 22: Ausnehmung

## Patentansprüche

1. Werkzeugaufnahme (3) umfassend einen Grundkörper (5) mit einer Aufnahmeöffnung (6) zur Aufnahme eines Einschraubwerkzeugs (2), einem in der Aufnahmeöffnung (6) angeordneten Innengewinde (7) zum haltenden Zusammenwirken mit einem Außengewinde (8) an dem Einschraubwerkzeug (2), und einem in dem Grundkörper (5) angeordneten und in der Aufnahmeöffnung (6) in einem Austrittsbereich (12) mündenden Versorgungskanal (11), wobei in der Aufnahmeöffnung (6) in dem Austrittsbereich (12) eine mit mindestens einem Durchgangskanal (19) versehene Dichtung (4; 4'; 4") vorgesehen ist, und wobei die Dichtung (4; 4'; 4") in einer Aussparung (18; 18'; 18") in dem Grundkörper (5) im Austrittsbereich (12) des Versorgungskanals (11) angeordnet ist, **dadurch gekennzeichnet, dass** sich die Aussparung (18; 18'; 18") in Richtung von der Aufnahmeöffnung (6) zu dem Versorgungskanal (11) vergrößert.

2. Werkzeugaufnahme (3) nach Anspruch 1, **dadurch gekennzeichnet, dass** die Dichtung (4; 4', 4") ringförmig ist.

3. Werkzeugaufnahme (3) nach Anspruch 1 oder 2, **dadurch gekennzeichnet, dass** die Aussparung (18') in Richtung von der Aufnahmeöffnung (6) zu dem Versorgungskanal (11) eine Stufe (21) mit größerer Innenabmessung aufweist.

4. Werkzeugaufnahme (3) nach einem der vorhergehenden Ansprüche, **dadurch gekennzeichnet, dass** die Dichtung (4; 4'; 4") in die Aufnahmeöffnung (6) hervorsteht.

5. Werkzeugaufnahme (3) nach einem der vorhergehenden Ansprüche, **dadurch gekennzeichnet, dass** die Dichtung (4") zum Eingriff in eine Ausnehmung (22) an einem freien Ende (15) eines Werkzeugschafts (10) des Einschraubwerkzeugs (2) ausgebildet ist.

6. Werkzeugaufnahme (3) nach einem der vorhergehenden Ansprüche, **dadurch gekennzeichnet, dass** die Dichtung (4; 4'; 4") einen Durchgangskanal (19) aufweist, welcher koaxial zu dem Versorgungskanal (11) im Austrittsbereich (12) angeordnet ist.

7. Einschraubwerkzeug (2) mit einem Werkzeugkopf (9) und einem Werkzeugschaft (10), wobei der Werkzeugschaft (10) ein Außengewinde (8) zum haltenden Zusammenwirken mit einem Innengewinde (7) einer Werkzeugaufnahme (3) aufweist und in dem Einschraubwerkzeug (2) ein Zuführkanal (13) ausgebildet ist, welcher in einem Eintrittsbereich (14) an einem freien Ende (15) des Werkzeugschafts (10) mündet, wobei an dem freien Ende (15) des Werkzeugschafts (10) in dem Eintrittsbereich (14) eine mit mindestens einer Durchgangsöffnung (19) versehene Dichtung (4") vorgesehen ist, **dadurch gekennzeichnet, dass** die Dichtung (4") in einer Ausnehmung (22) an dem freien Ende (15) des Werkzeugschafts (10) angeordnet ist, und dass sich die Ausnehmung (22) in Richtung von dem Werkzeugschaft (10) zu dem Werkzeugkopf (9) vergrößert.

8. Einschraubwerkzeug nach Anspruch 7, **dadurch gekennzeichnet, dass** die Ausnehmung (22) in Richtung von dem Werkzeugschaft zu dem Werkzeugkopf eine Stufe mit größerer Innenabmessung aufweist.

9. Einschraubwerkzeug nach Anspruch 7 oder 8, **dadurch gekennzeichnet, dass** die Dichtung (4") von dem freien Ende (15) des Werkzeugschafts (10) nach außen hervorsteht.

10. Werkzeuganordnung (1) umfassend ein Einschraubwerkzeug (2) und eine Werkzeugaufnahme (3) für das Einschraubwerkzeug (2), wobei in der Werkzeugaufnahme (3) ein Versorgungskanal (11) und in dem Einschraubwerkzeug (2) ein Zuführkanal (13) zur Versorgung und Zuführung von Schmier- und Kühlmittel vorgesehen ist, wobei zwischen dem Versorgungskanal (11) und dem Zuführkanal (13) eine mit mindestens einer Durchgangsöffnung (19) versehene Dichtung (4; 4'; 4") vorgesehen ist, **dadurch gekennzeichnet, dass** die Werkzeugaufnahme (3) nach einem der Ansprüche 1 bis 6 und/oder das Einschraubwerkzeug (2) nach einem der Ansprüche 7 bis 9 ausgebildet ist.

## Claims

1. Toolholder (3) comprising a main body (5) having an accommodating opening (6) for accommodating a screw-in tool (2), having an internal thread (7), which is arranged in the accommodating opening (6) and is intended for retaining interaction with an external thread (8) on the screw-in tool (2), and having a supply channel (11), which is arranged in the main body (5) and opens out in the accommodating opening (6) in an exit region (12), wherein the accommodating opening (6) contains, in the exit region (12), a seal (4; 4'; 4") provided with at least one through-passage channel (19), and wherein the seal (4; 4'; 4") is arranged in an aperture (18; 18'; 18") in the main body (5) in the exit region (12) of the supply channel (11), **characterized in that**, going in the direction from the accommodating opening (6) to the supply channel (11), the aperture (18; 18'; 18") increases in size.

2. Toolholder (3) according to Claim 1, **characterized in that** the seal (4; 4'; 4") is annular.

3. Toolholder (3) according to Claim 1 or 2, **characterized in that**, going in the direction from the accommodating opening (6) to the supply channel (11), the aperture (18') has a step (21) of relatively large inner dimensioning.

4. Toolholder (3) according to one of the preceding claims, **characterized in that** the seal (4; 4'; 4") projects into the accommodating opening (6).

5. Toolholder (3) according to one of the preceding claims, **characterized in that** the seal (4") is designed to engage in a recess (22) at a free end (15) of a shank (10) of the screw-in tool (2).

6. Toolholder (3) according to one of the preceding claims, **characterized in that** the seal (4; 4'; 4") has a through-passage channel (19), which is arranged in the exit region (12), coaxially in relation to the supply channel (11).

7. Screw-in tool (2) having a tool head (9) and a tool shank (10), wherein the tool shank (10) has an external thread (8) for retaining interaction with an internal thread (7) of a tool holder (3), and the screw-in tool (2) contains a feed channel (13) which opens out in an entry region (14) at a free end (15) of the tool shank (10), wherein the free end (15) of the tool shank (10) contains, in the entry region (14), a seal (4") provided with at least one through-passage opening (19), **characterized in that** the seal (4") is arranged in a recess (22) at the free end (15) of the tool shank (10), and **in that**, going in the direction from the took shank (10) to the tool head (9), the recess (22) increases in size.

8. Screw-in tool according to Claim 7, **characterized in that**, going in the direction from the took shank to the tool head, the recess (22) has a step of relatively large inner dimensioning.

9. Screw-in tool according to Claim 7 or 8, **characterized in that** the seal (4") projects outwards from the free end (15) of the tool shank (10).

10. Tool arrangement (1) comprising a screw-in tool (2) and a tool holder (3) for the screw-in tool (2), wherein the tool holder (3) contains a supply channel (11), and the screw-in tool (2) contains a feed channel (13) for supplying and feeding lubricant and coolant, wherein a seal (4; 4'; 4") provided with at least one through-passage opening (19) is provided between the supply channel (11) and the feed channel (13), **characterized in that** the toolholder (3) is designed according to one of Claims 1 to 6 and/or the screw-in tool (2) is designed according to one of Claims 7 to 9.

## Revendications

1. Attachement d'outil (3) comprenant un corps de base (5) muni d'une ouverture d'accueil (6) destinée à accueillir un outil à visser (2), d'un filetage femelle (7) disposé dans l'ouverture d'accueil (6) destiné à coopérer en maintien avec un filetage mâle (8) sur l'outil à visser (2), et d'un canal d'alimentation (11) disposé dans le corps de base (5) et qui débouche dans l'ouverture d'accueil (6) dans une zone de sortie (12), une garniture d'étanchéité (4 ; 4' ; 4") pourvue d'au moins un canal de passage (19) se trouvant dans l'ouverture d'accueil (6) dans la zone de sortie (12), et la garniture d'étanchéité (4 ; 4' ; 4") étant disposée dans un creux (18 ; 18' ; 18") dans le corps de base (5) dans la zone de sortie (12) du canal d'alimentation (11), **caractérisé en ce que** le creux (18 ; 18' ; 18") s'agrandit dans la direction de l'ouverture d'accueil (6) vers le canal d'alimentation (11).

2. Attachement d'outil (3) selon la revendication 1, **caractérisé en ce que** la garniture d'étanchéité (4 ; 4' ; 4") est de forme annulaire.

3. Attachement d'outil (3) selon la revendication 1 ou 2, **caractérisé en ce que** le creux (18') possède, dans la direction de l'ouverture d'accueil (6) vers le canal d'alimentation (11), un échelon (21) ayant une dimension intérieure plus grande.

4. Attachement d'outil (3) selon l'une des revendications précédentes, **caractérisé en ce que** la garniture d'étanchéité (4 ; 4' ; 4") fait saillie dans l'ouverture d'accueil (6).

5. Attachement d'outil (3) selon l'une des revendications précédentes, **caractérisé en ce que** la garniture d'étanchéité (4") est configurée en vue de venir en prise dans un évidement (22) à une extrémité libre (15) d'une queue d'outil (10) de l'outil à visser (2) .

6. Attachement d'outil (3) selon l'une des revendications précédentes, **caractérisé en ce que** la garniture d'étanchéité (4 ; 4' ; 4") possède un canal de passage (19) qui est disposé de manière coaxiale par rapport au canal d'alimentation (11) dans la zone de sortie (12).

7. Outil à visser (2) comprenant une tête d'outil (9) et une queue d'outil (10), la queue d'outil (10) possédant un filetage mâle (8) destiné à coopérer en maintien avec un filetage femelle (7) d'un attachement d'outil (3) et un canal d'arrivée (13) étant formé dans l'outil à visser (2), lequel débouche dans une zone d'entrée (14) à une extrémité libre (15) de la queue d'outil (10), une garniture d'étanchéité (4") pourvue d'au moins une ouverture de passage (19) se trouvant à l'extrémité libre (15) de la queue d'outil (10) dans la zone d'entrée (14), **caractérisé en ce que** la garniture d'étanchéité (4") est disposée dans un évidement (22) à l'extrémité libre (15) de la queue d'outil (10) et **en ce que** l'évidement (22) s'agrandit dans la direction de la queue d'outil (10) vers la tête d'outil (9).

8. Outil à visser selon la revendication 7, **caractérisé en ce que** l'évidement (22) possède, dans la direction de la queue d'outil vers la tête d'outil, un échelon ayant une dimension intérieure plus grande.

9. Outil à visser selon la revendication 7 ou 8, **caractérisé en ce que** la garniture d'étanchéité (4") fait saillie vers l'extérieur depuis l'extrémité libre (15) de la queue d'outil (10).

10. Arrangement d'outil (1) comprenant un outil à visser (2) et un attachement d'outil (3) pour l'outil à visser (2), un canal d'alimentation (11) se trouvant dans l'attachement d'outil (3) et un canal d'arrivée (13) dans l'outil à visser (2), en vue de l'alimentation avec et de l'arrivée d'un lubrifiant/réfrigérant, une garniture d'étanchéité (4 ; 4' ; 4") pourvue d'au moins une ouverture de passage (19) se trouvant entre le canal d'alimentation (11) et le canal d'arrivée (13), **caractérisé en ce que** l'attachement d'outil (3) est réalisé selon l'une des revendications 1 à 6 et/ou l'outil à visser (2) selon l'une des revendications 7 à 9.
